# EUROPÄISCHE PATENTANMELDUNG

(11) **EP 0 521 253 A2**
(43) Veröffentlichungstag der Anmeldung: **07.01.1993**
(21) Anmeldenummer: 92106914.2
(22) Anmeldetag: 23.04.1992
(51) Int. Cl.: H04B 10/24, H04L 5/14

(54) **Verfahren zur bidirektionalen Datenübertragung**

(30) Priorität: 03.05.1991 DE 4114485
(71) Anmelder: KE KOMMUNIKATIONS-ELEKTRONIK GMBH & CO, D-30179 Hannover (DE)
(72) Erfinder: Still, Michael, W-3012 Langenhagen (DE); Hennig, Andreas, W-3008 Garbsen 4 (DE); Schröder, Jürgen, W-3257 Springe 1 (DE)
(74) Vertreter: Döring, Roger, Dipl.-Ing.

(57) **Zusammenfassung**

Es wird ein Verfahren zur bidirektionalen Übertragung digitaler Daten über eine Glasfaser angegeben, mit welchem die Daten der einen Übertragungsrichtung in Pausen der anderen Übertragungsrichtung übertragen werden. Dazu werden die Bits von kontinuierlichen Datenströmen mindestens um den Faktor 4 verkürzt und die verkürzten Bits des Datenstroms der einen Übertragungsrichtung werden in den durch die Verkürzung entstandenen Lücken zwischen den Bits des Datenstroms der jeweils anderen Übertragungsrichtung übertragen. Die Bits werden in den empfangenden Stationen zur Rückgewinnung der kontinuierlichen Datenströme wieder auf ihre ursprüngliche zeitliche Breite verlängert.

## Beschreibung

Die Erfindung bezieht sich auf ein Verfahren zur bidirektionalen übertragung digitaler Daten über eine Glasfaser, mit welchem die Daten der einen Übertragungsrichtung in Pausen der anderen Übertragungsrichtung über die Glasfaser übertragen werden (DE-OS 38 25 126).

Durch die bidirektionale Datenübertragung über eine Glasfaser können bestehende Übertragungswege besser ausgenutzt werden. Ein solches Verfahren bietet sich insbesondere dann an, wenn gemäß der eingangs erwähnten DE-OS 38 25 126 für das Aussenden der Signale und deren Empfang das gleiche, auf die jeweilige Betriebsart umschaltbare Bauteil verwendet wird, an das die Glasfaser direkt angeschlossen werden kann. Eine Übertragung der Signale von einem Sender einer an die Glasfaser angeschlossenen Station zum Empfänger der Gegenstation ist nur möglich, wenn der Sender der Gegenstation nicht sendet. Im sogenannten Ping-Pong-Betrieb ist bei den bekannten Verfahren wechselweise immer nur einer der Sender der beiden Stationen im Betrieb. In Abhängigkeit von der Dauer des Sendebetriebs der gerade sendenden Station ist die Wartezeit der anderen Station bemessen, während der dieselbe keine Daten aussenden kann. Die der dadurch zwangsläufig passiven Station zufließenden Daten müssen während des Empfangsbetriebs gespeichert werden, was nur mit relativ großem Aufwand durchgeführt werden kann.

Der Erfindung liegt die Aufgabe zugrunde, das eingangs geschilderte Verfahren so weiterzubilden, daß die zu übertragenden Daten von beiden Stationen an den Enden der Glasfaser ohne wesentliche Verzögerungen gesendet werden können. Diese Aufgabe wird gemäß der Erfindung dadurch gelöst,
- daß die Bits von kontinuierlichen Datenströmen mindestens um den Faktor 4 verkürzt werden,
- daß die verkürzten Bits des Datenstroms der einen Übertragungsrichtung in den durch die Verkürzung entstandenen Lücken zwischen des Bits des Datenstroms der jeweils anderen Übertragungsrichtung übertragen werden und
- daß die Bits in den empfangenden Stationen zur Rückgewinnung der kontinuierlichen Datenströme wieder auf ihre ursprüngliche zeitliche Breite verlängert werden.

Bei Einsatz dieses Verfahrens können von beiden Stationen zeitgleich Datenströme gesendet und auch empfangen werden. Die Kapazität der in den Stationen anzuordnenden Speicher für die zufließenden, zu sendenden Daten kann klein gehalten werden. Da die entgegengesetzt laufenden Datenströme sich auf der Glasfaser nicht stören, muß nur in den Sende- und Empfangsgeräten dafür gesorgt werden, daß die ankommenden Bits nicht in der Sendephase einer Station eintreffen. Bei diesem Verfahren werden die Bits dann empfangen, wenn der Sender der empfangenden Seite gerade nicht aktiv ist, weil sein Datenstrom eine Lücke aufweist. Das wird durch die Verkürzung der Bits der beiden Datenströme um mindestens den Faktor 4 und die dadurch entstehenden Lücken sowie das auf diese Lücken zeitlich abgestimmte Senden der Bits erreicht. Kollisionen können nicht auftreten.

Das Verfahren nach der Erfindung wird im folgenden als Ausführungsbeispiel erläutert.

Es zeigen jeweils in schematischer Darstellung:
Fig. 1 einen kontinuierlichen Datenstrom mit unverkürzten und verkürzten Bits.
Fig. 2 zwei entgegengesetzt laufende Datenströme mit verkürzten Bits.
Fig. 3 eine Schaltung zur Durchführung des Verfahrens nach der Erfindung.

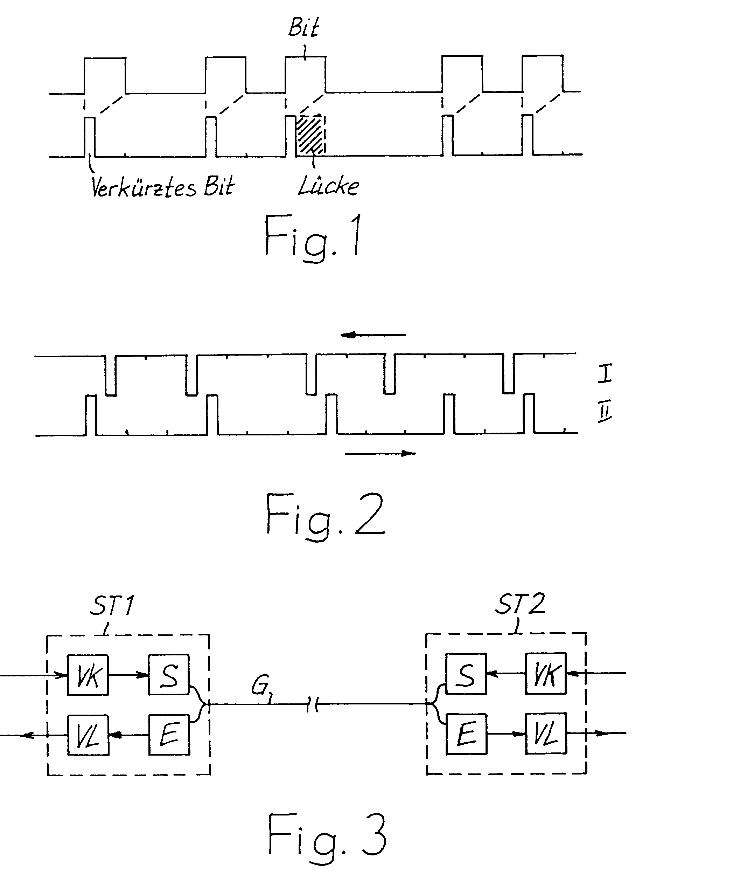

Die Übertragung der Daten erfolgt in kontinuierlichen Datenströmen mit einem beliebigen binären Code, so wie er beispielsweise in Fig. 1 oben dargestellt ist. Um eine gleichzeitige und kollisionsfreie Übertragung der Daten in beiden Richtungen zu ermöglichen, werden die Bits der Datenströme entsprechend Fig. 1 unten mindestens um den Faktor 4 verkürzt. Ihre zeitliche Breite beträgt dann also maximal 25 % der ursprünglichen Breite. Die Bits eines derart behandelten Datenstroms werden dann mit unveränderter Schrittgeschwindigkeit über eine Glasfaser G (Fig. 3) in der einen Richtung übertragen, während gleichzeitig ein auf die gleiche Weise behandelter Datenstrom in der Gegenrichtung so übertragen wird, daß dessen Bits jeweils in den durch die Verkürzung entstandenen Lücken, von denen in Fig. 1 eine schraffiert angedeutet ist, zwischen den Bits des anderen Datenstroms liegen. Die von der einen Seite gesendeten Bits werden auf der Gegenseite also in den Sendepausen empfangen. Zwei derartige Datenströme I und 11 sind in Fig. 2 dargestellt. Der Datenstrom I ist dabei des besseren Verständnisses wegen invertiert gezeichnet.

Die Verkürzung der Bits beider Datenströme I und 11 muß mindestens um den Faktor 4 erfolgen, damit bei jeder möglichen Länge der Glasfaser G und bei jeder zugehörigen Laufzeit der Datenströme auf derselben ein zeitliches Zusammenfallen von Sende- und Empfangssignalen an den Enden der Übertragungsstrecke vermieden ist.

Der Faktor 4 ist für die Verkürzung der Bits als Grenzwert anzusehen, der nur bei idealen Bedingungen gilt. Zweckmäßig werden die Bits stärker verkürzt oder es wird ein Code verwendet, durch welchen auch bei einem Faktor 4 für die Verkürzung sichergestellt ist, daß die zeitliche Breite der verkürzten Bits unter 25 % ihrer ursprünglichen Breite liegt. Ein solcher Code ist beispielsweise ein RZ-Code, bei dessen Anwendung die ursprünglichen Bits bereits auf 50 % verkürzt sind. Die Verkürzung um den Faktor 4 führt dann zu Bits, deren zeitliche Breite 12,5 % der ursprünglichen Breite beträgt. Mit derartigen Datenströmen ist beim bidirektionalen Betrieb genügend Zeit vorhanden, um zwischen Sende- und Empfangsbetrieb umschalten zu können.

Bei der Übertragung der Datenströme ist es nicht von besonderer Bedeutung, ob die verkürzten Sende-Bits am jeweiligen Ende der Glasfaser G genau in der Mitte der Lücken zwischen den Empfangs-Bits liegen. Es muß nur sichergestellt sein, daß ausreichend Zeit vorhanden ist, um an der jeweiligen Station zu unterscheiden, ob Sendephase oder Empfangsphase vorliegt, damit das entsprechende Empfangs-Bit fehlerfrei erkannt werden kann.

Es reicht dabei aus, wenn beim Einsatz eines Lasermoduls als Sende- und Empfangsbauteil in der Empfangsphase die Laserdiode weiter mit Vorstrom betrieben wird, so daß das ankommende Licht durch die Laserdiode hindurch auf die Monitordiode fallen kann. Es wäre jedoch auch möglich, die Laserdiode ganz abzuschalten.

Eine Übertragungsstrecke, über die digitale Daten mit dem Verfahren nach der Erfindung übertragen werden können, geht beispielsweise aus Fig. 3 hervor:
Sie besteht aus zwei Stationen ST1 und ST2, zwischen denen eine Glasfaser G angeordnet ist. Zu jeder Station gehören ein Verkürzer VK, ein Sender S, ein Empfänger E und ein Verlängerer VL. Als Verkürzer VK können beispielsweise ein digitales Laufzeitglied mit entsprechender Verknüpfung oder ein digitales Differenzierglied verwendet werden. Der Verlängerer VL kann beispielsweise ein Flip Flop sein, das mit der Frequenz des ursprünglichen digitalen Datenstroms getastet wird.

Die in den Stationen ST1 und ST2 ankommenden Bits der kontinuierlichen digitalen Datenströme werden im Verkürzer VK zeitlich verkürzt und von den Sendern S auf die Glasfaser G gegeben. Die verkürzten Bits werden von den Empfängern E der jeweiligen Gegenstation empfangen und von den Verlängerern VL wieder auf die ursprüngliche zeitliche Länge gebracht. Die ursprünglichen kontinuierlichen Datenströme sind dann zurückgewonnen.

## Patentansprüche

1. Verfahren zur bidirektionalen Übertragung digitaler Daten über eine Glasfaser, mit welchem die Daten der einen Übertragungsrichtung in Pausen der anderen Übertragungsrichtung über die Glasfaser übertragen werden, dadurch gekennzeichnet,
- daß die Bits von kontinuierlichen Datenströmen mindestens um den Faktor 4 verkürzt werden,
- daß die verkürzten Bits des Datenstroms der einen Übertragungsrichtung in den durch die Verkürzung entstandenen Lükken zwischen des Bits des Datenstroms der jeweils anderen Übertragungsrichtung übertragen werden und
- daß die Bits in den empfangenden Stationen zur Rückgewinnung der kontinuierlichen Datenströme wieder auf ihre ursprüngliche zeitliche Breite verlängert werden.

2. Verfahren nach Anspruch 1, dadurch gekennzeichnet, daß die Datenströme vor dem Verkürzen der Bits zunächst nach den Vorschriften eines RZ-Codes codiert werden.
